# EUROPEAN PATENT SPECIFICATION

(11) **EP 2 773 077 B1**
(45) Date of publication and mention of the grant of the patent: **07.08.2019**
(21) Application number: 13290040.8
(22) Date of filing: 28.02.2013
(51) Int. Cl.: H04L 29/06, H04W 4/50, H04W 4/60, H04W 8/20, H04W 12/08

(54) **Notification mechanism**
Benachrichtigungsmechanismus
Mécanisme de notification

(43) Date of publication of application: 03.09.2014
(73) Proprietor: IDEMIA France, 92400 Courbevoie (FR)
(72) Inventor: Dumoulin Jérôme, 92700 Colombes (FR); Muresianu, Philippe, 92700 Colombes (FR)
(74) Representative: Nicolle, Olivier

(56) References cited:
- "No title retrieved", 3GPP2 DRAFT; S00-20110725-013A__EMBEDDED SIM USE CASES AND REQTS V1 0 CLEAN, 3RD GENERATION PARTNERSHIP PROJECT 2, 3GPP2, 2500 WILSON BOULEVARD, SUITE 300, ARLINGTON, VIRGINIA 22201 ; USA , vol. TSGS 27 September 2011 (2011-09-27), pages 1-38, XP062097169, Retrieved from the Internet: URL:http://ftp.3gpp2.org/TSGS/Working/_201 1/2011-09-Chengdu/TSG-S-2011-09-Chengdu/WG 4 Security/2011_08_25CC/Remanded/ [retrieved on 2011-09-27]
- LAURENT COUREAU (ORANGE): "A High Level Remote Provisioning Architecture;SCPREQ(11)0113_GSMA_-_embedde d_UICC_-_a_high_level_remote_provisioning_ architect", ETSI DRAFT; SCPREQ(11)0113_GSMA_-_EMBEDDED_UICC_-_A_HI GH_LEVEL_REMOTE_PROVISIONING_ARCHITECT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP, 12 July 2011 (2011-07-12), pages 1-16, XP014099004, [retrieved on 2011-07-12]
- Frank Sudholt: "Embedded SIM", 22. Fraunhofer-SmartCard Workshop 2012, 9 February 2012 (2012-02-09), XP055068704, Retrieved from the Internet: URL:http://www.smartcard-workshop.de/conte nt/dam/smartcard/de/documents/WS12/20_WS20 12_Folien_EmbeddedSIM_Sudholt.pdf [retrieved on 2013-06-28]
- "Reprogrammable SIMs: Technology, Evolution and Implications Final Report", , 25 September 2012 (2012-09-25), pages 1-95, XP055126567, Retrieved from the Internet: URL:http://stakeholders.ofcom.org.uk/binar ies/research/telecoms-research/reprogramma ble-sims.pdf [retrieved on 2014-07-02]

## Description

### FIELD OF INVENTION

The present subject matter relates to an embedded smart card and, particularly but not exclusively, to a notification mechanism for profile status change in the embedded smart card.

### BACKGROUND

An embedded smart card is typically a silicon based chip, which is embedded in a device to allow the device to connect to a mobile network. Embedded smart cards are becoming popular as they can have enhanced security, smaller size, and can be mass produced along with devices. The embedded smart cards can thus help achieve greater connectivity amongst the devices. Also, as the embedded smart card may be physically unswappable, it may prevent unauthorized access of the device as a user cannot remove or change the embedded smart card. The embedded smart cards may also be referred to by various names, such as an embedded subscriber identity module (eSIM), an integrated smart card, a reprogrammable SIM, an embedded smart card, and an embedded universal integrated circuit card (eUICC).

The embedded smart card typically connects the device to the network through a profile stored in the embedded smart card. The profile includes a set of credentials, data, and applications, which may be used by the device to connect to the network. Moreover, it may be possible for the embedded smart card to have multiple profiles, which allow the device to connect to different networks. However, only one or a limited number of profiles can be active in the embedded smart card at any point in time depending on the communication standard used. The device can connect to the network through a currently active profile from among the multiple profiles. To connect using a different profile, a change in profile has to be realized. Since the user cannot change the embedded smart card, the change in profile has to be managed remotely through profile status changes, such as by enabling and disabling profiles.

"Reprogrammable SIMs: Technology, Evolution and Implications, Final Report" 25 September 2012, pages 1-95, XP055126567 discloses a mobile network operator (MNO) subscription swapping. The eUICC has two profiles available MNO_A and MNO_B one being active and other inactive. The user elects to switch between MNO profiles on their device. The user selects an option to activate a profile and request a change in active profiles to the subscription manager. The subscription manager checks to determine if change command is allowed for the particular eUICC and if allowed the subscription manager activates the particular profile. The MNOs have credentials and subscriptions associated with the eUICC.

### SUMMARY

This summary is provided to introduce concepts related to a notification mechanism for a profile status change in an embedded smart card. This summary is not intended to identify essential features of the claimed subject matter nor is it intended for use in determining or limiting the scope of the claimed subject matter.

In one embodiment of the present subject matter, an embedded smart card that can notify a subscription manager upon execution of a profile status change command, and a device comprising the embedded smart card is disclosed. The embedded smart card receives the profile status change command from the subscription manager and stores response parameters associated with the profile status change command. The response parameters correspond to parameters for addressing a transport security protocol for sending a notification to the subscription manager. Thereafter, the embedded smart card changes a status of a targeted profile in the embedded smart card upon execution of the profile status change command. Once the profile status change command is executed, the embedded smart card is reset, upon receiving a card reset request from a device in response to changing the status of the targeted profile. The embedded smart card sends a notification to the subscription manager using the response parameters after resetting the embedded smart card.

In one implementation, the profile status change command is a profile enabling command to enable the targeted profile and disable a currently active profile in the embedded smart card. In another implementation, the profile status change command is a profile disabling command to disable the targeted profile and enable a provisioning profile in the embedded smart card.

In one implementation, the embedded smart card also stores a response mode associated with the profile status change command and the notification is sent using the response mode also. In one implementation, the notification notifies the subscription manager about the currently active profile in the embedded smart card after execution of the profile status change command. The notification may include at least one identifier, such as at least one of IMEI, MSISDN, IMSI, eUICC-ID, ICC-ID, CIN, and key server address. At least one identifier may be used for addressing of transport protocols.

In one embodiment of the present subject matter, a method for notifying the subscription manager upon execution of the profile status change command in the embedded smart card is disclosed. The method comprises receiving the profile status change command from the subscription manager. Further, response parameters and response mode associated with the profile status change command are stored in the embedded smart card. The response parameters correspond to parameters for addressing the transport security protocol for sending a notification to the subscription manager and the response mode identifies the transport security protocol. The method comprises changing a status of a targeted profile in the embedded smart card upon execution of the profile status change command. The embedded smart card is reset upon receiving a card reset request from the device in response to changing the status of the targeted profile command. Furthermore, a notification is sent from the embedded smart card to the subscription manager using the response parameters and the response mode after resetting the embedded card.

In further embodiments, a device comprising the embedded smart card capable of implementing the notification mechanism, a system including a subscription manager and the device comprising the embedded smart card, and a computer readable medium comprising instructions for implementing the notification mechanism are also described.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. It should be appreciated by those skilled in the art that any block diagrams herein represent conceptual views of illustrative systems embodying the principles of the present subject matter.
Figure 1 schematically illustrates a network environment for implementing a notification mechanism for a profile status change in an embedded smart card, in accordance with an embodiment of the present subject matter.
Figure 2 is an exemplary flow diagram indicating a procedure for notifying a subscription manager upon execution of a profile enabling command, in accordance with an embodiment of the present subject matter.
Figure 3 is an exemplary flow diagram indicating a procedure for notifying a subscription manager upon execution of a profile disabling command, in accordance with an embodiment of the present subject matter.
Figure 4 illustrates a method for notification of profile status change in an embedded smart card, in accordance with an embodiment of the present subject matter.

### DESCRIPTION OF EMBODIMENTS

An embedded smart card can include multiple profiles for connecting to a network. Each profile may allow a device having the embedded smart card to connect to a network. Generally, there are two types of profiles in the embedded smart card: operational profiles and provisioning profiles. An operational profile may include credentials of a mobile network operator, data, and applications to be provisioned on to the embedded smart card. A provisioning profile may be used to provide network connectivity for actions of profile management. The provisioning profile can also be used as a fallback profile, if any problem occurs with another profile.

Further, various commands may be defined by standard bodies, such as Global System for Mobile communication Association (GSMA), which can be associated with the profiles in the embedded smart card, such as a profile enabling command, a profile disabling command, a profile download command, and a profile deletion command. These commands, upon execution in the embedded smart card, can perform certain actions corresponding to the command. For example, the profile enabling command activates a targeted profile. When the targeted profile is enabled or activated, the embedded smart card is reset and a change of network to which the device is connected may take place. Further, a change of Mobile Station International Subscriber Directory Number (MSISDN) may also take place. The MSISDN is generally referred to as a phone number of the device. In another example, the profile disabling command deactivates the targeted profile and activates the provisioning profile.

When the profile is enabled or disabled a status of the profile is changed. In case of the profile enabling command, status of the targeted profile is changed from disabled to enabled. In case of the profile disabling command, status of the targeted profile is changed from enabled to disabled. These changes in the status may be understood as a profile status change. Further, when one of the profile enabling and the profile disabling is executed in the embedded smart card, it may become difficult for the embedded smart card to notify a subscription manager. The subscription manager may be understood as an entity trusted by the network operator to manage credentials, data, and application in the embedded smart card.

In a conventional approach, existing architectures for UICC, i.e., non-embedded chips, such as the one specified in ETSI 102.225, rely on encapsulating a set of commands as a script in a specific format. The encapsulated set of commands may include information related to sending of a response to the subscription manager upon execution of the command. However, the ETSI 102.225 protocols rely on continuity of some identifiers, for example, phone number of the device for sending the response.

However, in an embedded smart card, when a profile is enabled or disabled upon execution of the profile enabling or profile disabling command, the identifiers can also get changed. Therefore, the embedded smart card may not be able to send the response with identifiers used in the received command. If the profile status change is not communicated to the subscription manager, the subscription manager may not be able to decide which profile is the currently active profile in the embedded smart card and therefore which credentials, data, and applications are to be used to communicate with the embedded smart card

In one embodiment of the present subject matter, a notification mechanism for a profile status change in an embedded smart card is disclosed. When the profile status is changed in the embedded smart card, a notification is sent to a subscription manager to communicate a successful change in profile status and provide one or more identifiers of the currently active profile in the embedded smart card. The subscription manager can then manage the device having the embedded smart card through the currently active profile

In one implementation, when a user of the device wishes to change the network to which the device is connected, the subscription manager of the network may send a profile status change command to the embedded smart card. It will be appreciated that the profile status change command may be the profile enabling or the profile disabling command and can identify a targeted profile in the embedded smart card to be enabled or disabled. Further, the profile status change command may also be associated with response parameters and a response mode. The response parameters and the response mode may be used for identifying the protocols to be used for transmitting a notification to the subscription manager.

In one implementation, the profile status change command may be encrypted using appropriate transport security protocols and may be sent to the embedded smart card using protocols that are supported by the embedded smart card.

On receiving the profile status change command, the embedded smart card decrypts and executes the profile status change command. In one implementation, the embedded smart card stores the response parameters associated with the profile status change command. The embedded smart card may also store the response mode along with the response parameters. In another implementation, if the response parameters and the response mode are not present, the embedded smart card may use the response parameters and the response mode used in transmitting the profile status change command. Thereafter, depending upon the profile status change command, the targeted profile may be enabled or disabled.

In one implementation, if the profile status change command is the profile enabling command, the embedded smart card enables or activates the targeted profile and disables or deactivates a currently active profile. After execution of the profile enabling command, the targeted profile becomes the currently active profile.

In another implementation, if the profile status change command is the profile disabling command, the embedded smart card disables or deactivates the targeted profile and enables or activates a provisioning profile. Now, the provisioning profile may be referred to as the currently active profile as it allows the device to connect to a network corresponding to the provisioning profile.

As content of the embedded smart card may be changed upon execution of the profile status change command, therefore, the content of the embedded smart card may have to be coordinated with the device having the embedded smart card. For this, the device sends a card reset request to the embedded smart card. Upon receiving the card reset request from the device, the embedded smart card is reset to coordinate with the device. Thereafter, the device connects to a network corresponding to the currently active profile in the embedded smart card. As the name suggests, the currently active profile is now the profile which is active in the embedded smart card after execution of the profile status change command.

Once the device connects to the network, a notification is sent to the subscription manager of the network. The notification informs the subscription manager about the successful execution of the profile status change command in the embedded smart card. The notification may include at least one identifier, such as International Mobile Station Equipment Identity (IMEI), MSISDN, IMSI, Embedded Universal Integrated Circuit Card - Identifier (eUICC-ID), Integrated Circuit Card - Identifier (ICC-ID), Card Identifier Number (CIN), and key server address. These identifiers inform the subscription manager about the currently active profile in the embedded smart card. Further, the identifiers may be used for addressing of transport protocols. The embedded smart card may use the response parameters and the response mode to transmit the notification to the subscription manager. Thus, the subscription manager becomes aware about the currently active profile in the embedded smart card. Further, on receiving the notification, the subscription manager updates information about the currently active profile.

Therefore, with the present subject matter, any change in the profile status is notified to the subscription manager. By notifying the subscription manager, the embedded smart card confirms the successful execution of the profile enabling or the profile disabling command. The subscription manager is thus kept informed about the currently active profile, which allows the subscription manager to communicate with and monitor the embedded smart card.

It should be noted that the description and figures merely illustrate the principles of the present subject matter. It will thus be appreciated that those skilled in the art will be able to devise various arrangements that, although not explicitly described or shown herein, embody the principles of the present subject matter. Further, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, on, and when as used herein are not exact terms that mean an action takes place instantly upon an initiating action but that there may be some small but reasonable delay, such as a propagation delay, between the initial action, and the reaction that is initiated by the initial action. Additionally, the words "connected" and "coupled" are used throughout, for clarity of the description and can include either a direct connection or an indirect connection.

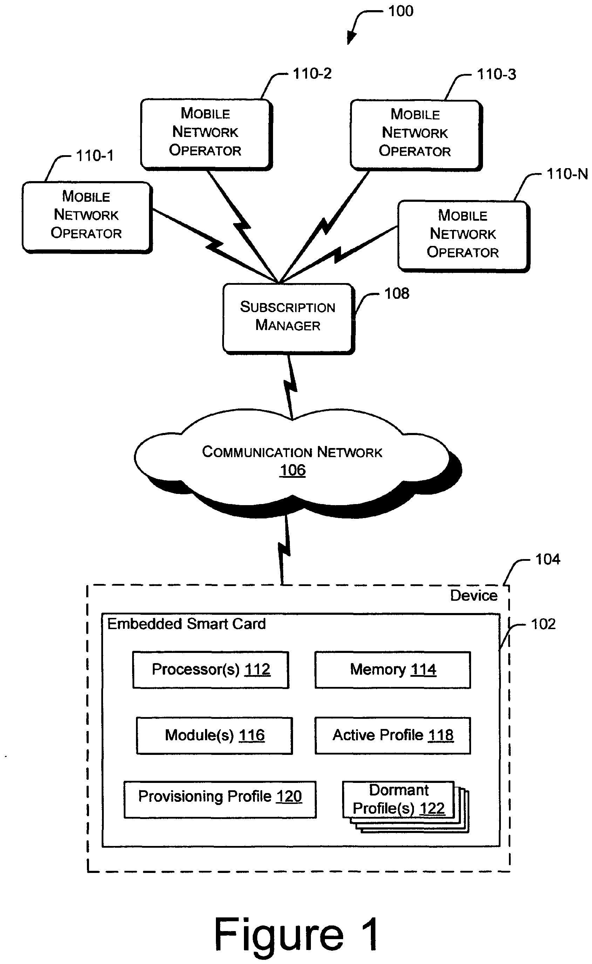

The manner in which a notification mechanism for a profile status change in an embedded smart card has been explained in details with respect to the Figures 1-4. While aspects of described notification mechanism for the profile status change in the embedded smart card can be implemented in any number of different computing systems, transmission environments, and/or configurations, the embodiments are described in the context of the following exemplary system(s).

Figure 1 schematically illustrates a network environment 100 implementing a notification mechanism for a profile status change in an embedded smart card, in accordance with an embodiment of the present subject matter. The network environment 100 includes an embedded smart card 102 embedded in a device 104. The device 104 having the embedded smart card 102 is connected to a communication network 106, according to an embodiment of the present subject matter.

In one implementation, the device 104 may be any User Equipment (UE) used by a user to access telecom services through a network. Examples of the device 104 may include, without limitation, mobile phones, tablets, hand-held devices, laptops or other portable computers, and the like. In another implementation, the device 104 may be any smart device managed by machine-to-machine (M2M) technology.

The communication network 106 may be a wireless network, a wired network, or a combination of wired and wireless networks. The communication network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Long Term Evolution (LTE) Network, and the like. Further, depending on the technology, the communication network 106 includes various network entities, such as gateways, routers; however, such details have been omitted for ease of understanding.

Further, the network environment includes a subscription manager 108 and a plurality of mobile network operators 110-1, 110-2, 110-3, ...., and 110-N, hereinafter collectively referred to as the plurality of mobile network operators 110 and individually referred to as the mobile network operator 110. The subscription manager 108 is an entity in the network environment 100 trusted by the plurality of mobile network operators 110. The subscription manager 108 is generally responsible for managing subscription for provided by the plurality of mobile network operators 110. The subscription may be understood as a commercial relationship between the user and the mobile network operator 110 for accessing a network of the mobile network operator 110 using a device. The mobile network operator 110 may be a telecom service provider which provides telecom services, such as calls, Short Message Service (SMS), Multimedia Messaging Service (MMS), and data service through a network.

As shown in Figure 1, the embedded smart card 102 may include multiple profiles for connecting to the network. A profile may include a set of credentials, data, and application, which may be used by the device to connect to the network provided by the mobile network operator corresponding to the profile. The credentials may include algorithms, identifiers, and International Mobile Subscriber Identity (IMSI) to support authentication and mutual communication. Generally, one profile from the multiple profiles is active at any point in time.

In one example, the embedded smart card 102 includes processor(s) 112, memory 114, module(s) 116, an active profile 118, a provisioning profile 120, and dormant profile(s) 122. The processor(s) 112 may be implemented as one or more microprocessors, microcomputers, microcontrollers, central processing units, state machines, logic circuitries, and/or any devices that manipulate signals based on operational instructions. Among other capabilities, the processor(s) 112 may be configured to fetch and execute computer-readable instructions stored in the memory 114. The memory 114 may include any computer-readable medium known in the art including, for example, volatile memory, such as static random access memory (SRAM) and dynamic random access memory (DRAM), and/or non-volatile memory, such as read only memory (ROM), erasable programmable ROM, and flash memories.

The module(s) 116 may include an operating system for performing the various operations in the embedded smart card 102, such as executing commands and running applications. The module(s) 116 may also include programs or coded instructions that supplement applications or functions performed by the embedded smart card 102. The module(s) 116 may be software modules or hardware modules or a combination of the two. Further, some of the module(s) 116 may be stored in the memory 114.

The active profile 118 is a profile, from among the multiple profiles, which is currently enabled in the embedded smart card 102. The active profile 118 hereinafter may be interchangeably referred to as a currently active profile 118. The active profile 118 is also referred to as an operational profile. The active profile is the profile through which the device 104 is currently connected to the network.

The provisioning profile 120 on the other hand may be used for managing the other profiles, such as the active profile 118 and the dormant profile(s) 122 in the embedded smart card 102. The provisioning profile 120 may be enabled to allow a recovery point during a transition in case of any failure in operation. Further, the provisioning profile 120 may coexist with the active profile 118 but is typically not used for purposes other than managing the profiles in the embedded smart card 102. The provisioning profile 120 may also be referred to as an administration profile.

The dormant profile(s) 122 are the profiles, in the embedded smart card 102, which are inactive, as typically only one profile from the multiple profiles can be active at any point in time. However, it may be possible that a limited number of profiles, such as two profiles, may be simultaneously active depending on the communication standard used.

In one embodiment of the present subject matter, whenever the subscription of the device 104 is changed, the profile corresponding to a new subscription is enabled. When a new profile is enabled, the profile that was active in the embedded smart card is disabled as both can not be active simultaneously. In another embodiment, when the subscription of the device 104 expires or is temporarily put on hold, the profile which is active in the embedded smart card is disabled and the provisioning profile is enabled. Therefore, the profiles may be enabled or disabled in the embedded smart card 102 based on the subscription opted by the user. For the purpose, the subscription manager 108 may send a profile status change command to the embedded smart card 102. In one implementation, the profile status change command may be a profile enabling command. In another implementation, the profile status change command may be a profile disabling command.

The profile status change command may include a profile identifier (pID) or a Security Domain Application Identifier (AID SD) to determine a targeted profile for enabling or disabling. In an example, the profile status change command may include an Issuer Security Domain Identifier (AID ISD-P). The profile status change command may also be associated with response parameters and a response mode. The response mode may correspond to the type of transport protocol to be used to send notifications to the subscription manager. The protocol may be, but is not limited to, Short Message Service - Point to Point (SMS-PP) protocol, Card Application Toolkit - Transport Protocol (CAT-TP), Hypertext Transfer Protocol (HTTP), and Port Addressing. The Response Parameters may correspond to the parameters that are used by the transport protocols identified in the response mode. For example, in case, the response mode indicates an SMS protocol, the response parameters would include at least one of a destination address, a data coding scheme, and other parameters defined in Third Generation Partnership Project (3GPP) 23.048 or other relevant standards as may be applicable.

In one implementation, the profile status change command may be sent from the subscription manager 108 to the embedded smart card 102 using any protocol that is supported by the embedded smart card 102. The profile status change command may be encrypted by using transport security protocols. In one example, the transport security protocols used for encryption are based on standards as described in GlobalPlatform card specifications.

Once the profile status change command is received by the embedded smart card 102, the embedded smart card 102 decrypts the profile status change command to execute the profile status change command in the embedded smart card 102. The embedded smart card 102 stores the response parameters and the response mode associated with the profile status change command. In one implementation, the profile status change command may include the response parameters and the response mode. In another implementation, in case the response parameters and the response mode are not present in the profile status change command, the embedded smart card 102 may store the response parameters and the response mode used by the profile status change command. In yet another implementation, the response mode stored by the embedded smart card may be a default response mode.

Thereafter, in case, when the profile status change command is the profile enabling command, the embedded smart card 102 enables the targeted profile and disables the currently active profile. The targeted profile allows the device 104 to connect to a network provided by the mobile network operator 110 corresponding to the targeted profile.

For example, a user may have a subscription for the services provided by the mobile network operator 110-1, but the user may wish to change the mobile network operator 110-1 to the mobile network operator 110-2. In such a case, the profile which corresponds to the mobile network operator 110-2 is the targeted profile which is to be enabled and the profile corresponding to the mobile network operator 110-1 is the currently active profile which will be disabled. Therefore, after execution of the profile enabling command, the targeted profile may become the currently active profile 118 and the previously currently active profile 118 corresponding to mobile network operator 110-1 may become one of the dormant profile(s) 122.

In case, when the profile status change command is the profile disabling command, the embedded smart card 102 disables the targeted profile and enables the provisioning profile 120. In such a case, the targeted profile may become one of the dormant profile(s) 122 and the provisioning profile 120 may act as the currently active profile 118.

Subsequently, upon execution of the profile status change command, a card reset request is sent form the device 104 to the embedded smart card 102. For example, as disclosed in the ETSI Technical Specification (TS) 102.223, the embedded smart card 102 may have an ability to notify the device 104 about changes in configuration of the embedded smart card 102 using a Card Application Toolkit Refresh command. Thus, whenever there is change in the configuration of the embedded smart card 102, the change in the configuration is notified to the device 104 and the device 104 can cause the embedded smart card 102 to reset. Once the embedded smart card 102 is reset, content in the device 104 and the embedded smart card 102 is coordinated or synchronized. The device 104 parses the content, according to Universal Integrated Circuit Card (UICC) initialization process defined for example in 3GPP 31.102. Generally, some of the content is stored in the device 104 and the same content is also stored in the embedded smart card 102. Since the content in the embedded smart card 102 may change, whenever the profile is changed, the reset of the embedded smart card 102 may force the device 104 to run again the UICC initialization process defined for example in the 3GPP 31.102, and may therefore update the content stored in the device 104.

Once the content of the embedded smart card 102 and the device 104 is coordinated, thereafter, the device 104 may register with the network corresponding to the currently active profile 118 in the embedded smart card 102. Further, the embedded smart card 102 may notify the subscription manager 108 about successful execution of the profile status change command by sending a notification. By doing so, the embedded smart card 102 informs the subscription manager 108 about the currently active profile 118 in the embedded smart card 102. In one implementation, the embedded smart card 102 may use the stored response parameters and the response mode to send the notification to the subscription manager 108. In one implementation, the response parameters may contain an address of a server. In such cases, the embedded smart card 102 sends the notification to the server and the server may further forward the notification to the subscription manager 108. In such cases, the server may be responsible for notifying the currently active profile 118 to the subscription manager 108.

In one implementation, if the device 104 fails to register with the network, them there is no connection to notify the subscription manager 108. In such a case, the embedded smart card 102 may perform a default action, for example, a switch-back action to switch to the profile which was the currently active profile 118 in the embedded smart card before execution of the profile status change command. The embedded smart card may 102 also switch to the provisioning profile 120 which can act as a fall-back profile in the embedded smart card 102. Once the device 104 manages to connect to a network using the default action, a notification can be sent regarding the successful connection as described herein.

The notification includes at least one identifier, such as one of IMEI, MSISDN, IMSI, eUICC-ID, ICC-ID, CIN, and key server address. Moreover, some of the identifiers may be necessary as parameters of the notification and may always be present depending on the communication protocol and standard used. For example, the MSISDN, which is the mobile phone number, may be an essential identifier in the notification. The MSISDN may be used for addressing in some transport protocols, for example, SMS protocol. In one implementation, the identifiers sent to the subscription manager 108 are present in the currently active profile 118. In another implementation, the identifiers are generic to the embedded smart card 102. In one example, the ICC-ID may be retrieved from enabled profile file system, as defined in 3GPP TS 51.011, for sending to the subscription manager 108. In another example, the CIN stored in issuer security domain (ISD), as defined in Global Card Specification 2.2.1, may be transmitted to the subscription manager 108 in the notification. The subscription manager 108 may use the identifier for addressing purpose and, at the same time, the subscription manager 108 may provide information about the embedded smart card 102 based on the identifier to other entities, so that the other entities are also informed about the embedded smart card 102. The other entities may be the mobile network operators or regulatory bodies.

Therefore, with the present subject matter, the subscription manager 108 is kept informed about the profile which is currently active in the embedded smart card 102 after execution of the profile status change command. The subscription manager 108 is thus aware about the currently active profile 118 in the embedded smart card 102. Further, with the help of the notification, the subscription manager 108 may remain updated with information about usage of the embedded smart card 102.

It will be understood that when it is said that the embedded smart card 102 performs certain operations, such as enables or disables a profile and executes the profile status change command, the processor 102 and operating systems or other applications in the module(s) 116 integrated in the embedded smart card 102 are performing the operations.

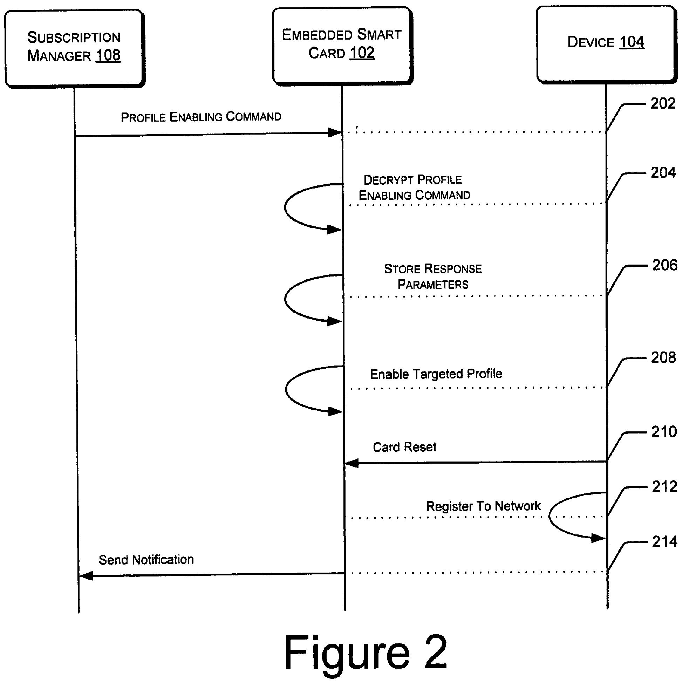

Figure 2 is an exemplary flow diagram indicating a procedure for notifying the subscription manager 108 upon execution of the profile enabling command, in accordance with an embodiment of the present subject matter. As shown in Figure 2, at step 202, the subscription manager 108 sends the profile enabling command to the embedded smart card 102 to enable a targeted profile in the embedded smart card 102. The embedded smart card 102 may already have details related to the targeted profile, as the targeted profile can be one of the dormant profile(s) 122. The profile enabling command is encrypted using the transport security protocols that are supported by the embedded smart card 102. The profile enabling command may be associated with the response parameters and the response mode. At step 204, the embedded smart card 102 decrypts the profile enabling command.

Subsequently, at step 206, the embedded smart card 102 stores the response parameters and the response mode obtained after decrypting the profile enabling command. In one implementation, the response parameters and the response mode may be included in the profile enabling command. If the response parameters and the response parameters are not present in the profile enabling command, the embedded smart card 102 may store the response parameters and the response mode used by the subscription manager 108 for sending the profile enabling command. At step 208, the embedded smart card 102 enables the targeted profile. The embedded smart card 102 also disables the currently active profile 118 if only one active profile is allowed at one time (not shown in Figure 2). Therefore, the targeted profile becomes the currently active profile 118 and the profile which was active becomes part of the dormant profiles 122.

At step 210, the device 104 triggers a reset for resetting the embedded smart card 102 so that the content of the device 104 and the embedded smart card 102 is coordinated. Once the embedded smart card 102 is reset, at step 212, the device 104 registers to the mobile network operator 110 corresponding to the targeted profile, which is now the currently active profile 118 (not shown in the Figure 2) in the embedded smart card 102. Further, at step 214, the embedded smart card 102 sends a notification to the subscription manager 108 for notifying successful execution of the profile enabling command.

With the help of the notification, the subscription manager 108 becomes aware about the currently active profile 118 in the embedded smart card 102. The embedded smart card 102 may use the stored response parameters and the response mode to send the notification to the subscription manager 108. The notification may include at least one of IMEI, MSISDN, IMSI, eUICC-ID, ICC-ID, CIN, and key server address, which may be used for addressing by the transport protocols.

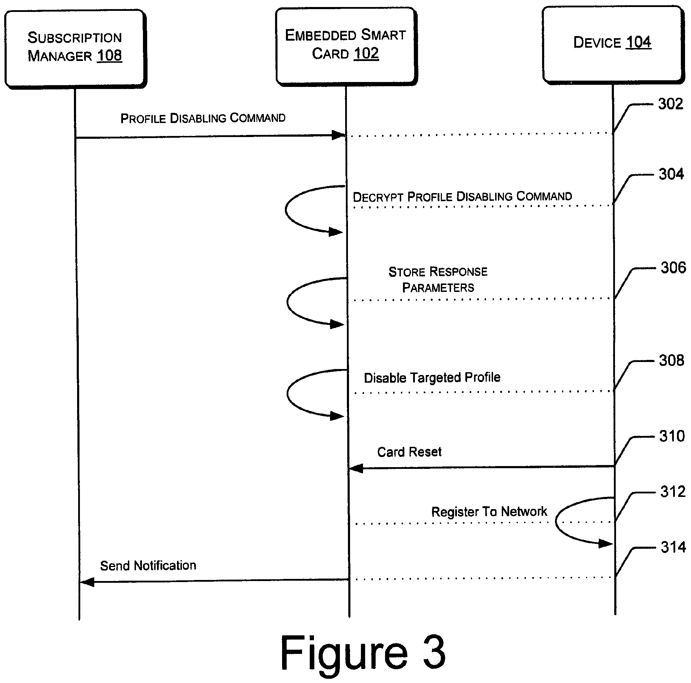

Figure 3 is an exemplary flow diagram indicating a procedure for notifying the subscription manager 108 upon execution of the profile disabling command, in accordance with an embodiment of the present subject matter. As shown in Figure 3, at step 302, the subscription manager 108 sends the profile disabling command to the embedded smart card 102 to disable a targeted profile in the embedded smart card 102. The profile disabling command is encrypted using the transport security protocols that are supported by the embedded smart card 102. The profile disabling command may also be associated with the response parameters and the response mode. At step 304, the embedded smart card 102 decrypts the profile disabling command.

Subsequently, at step 306, the embedded smart card 102 stores the response parameters and the response mode obtained after decrypting the profile disabling command. In one implementation, if the response parameters and the response mode are not present in the profile disabling command, the embedded smart card 102 may store the response parameters and the response mode used for sending the profile disabling command. At step 308, the embedded smart card 102 disables the targeted profile. Further, the embedded smart card enables the enables the provisioning profile 120 (not shown in Figure 3). Therefore, the targeted profile becomes one of the dormant profiles 122 and the provisioning profile 120 acts as the currently active profile 118.

At step 310, the device 104 triggers a reset, for resetting the embedded smart card 102 so that the content of the device 104 and the embedded smart card 102 is coordinated. Once the embedded smart card 102 is reset, at step 312, the device registers to the network corresponding to the provisioning profile 120, which is now the currently active profile 118 in the embedded smart card 102.

Further, at step 314, the embedded smart card 102 sends a notification to the subscription manager 108 for notifying successful execution of the profile disabling command. With the help of the notification, the subscription manager 108 becomes aware about the currently active profile 118 in the embedded smart card 102. The embedded smart card 102 may use the stored response parameters and the response mode to send the notification the subscription manager 108. The notification may include at least one of IMEI, MSISDN, IMSI, eUICC-ID, ICC-ID, CIN, and key server address, which may be used for addressing of the transport protocols.

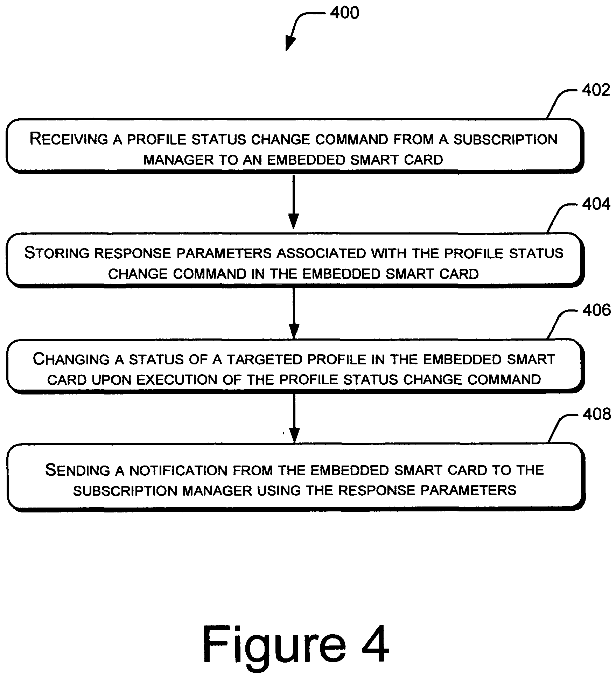

Figure 4 illustrates a method for notification mechanism for profile status change in an embedded smart card 102, in accordance with an embodiment of the present subject matter. The order in which the method 400 is described is not intended to be construed as a limitation. Additionally, some of the individual blocks may be deleted from the method 400 without departing from the scope of the subject matter described herein. Furthermore, the method 400 can be implemented in any suitable hardware, software, firmware, or combination thereof. It would be understood that the method 400 can be performed by programmed devices.

The method(s) 400 may be described in the general context of computer executable instructions. Generally, computer executable instructions can include routines, programs, objects, components, data structures, procedures, modules, functions, etc., that perform particular functions or implement particular abstract data types. Herein, some embodiments are also intended to cover computer readable media, for example, digital data storage media, which encode computer readable instructions, wherein said instructions perform some or all of the steps of the described method. The computer readable media may include, for example, digital memories, magnetic storage media, such as a magnetic disks and magnetic tapes, hard drives, or optically readable digital data storage media. Further, the computer readable media can be used to transfer the computer readable instructions to the embedded smart card, either directly or over a network, so that a processor of the embedded smart card can execute the instructions.

At block 402, a profile status change command is received from the subscription manager 108 to the embedded smart card 102. In one implementation, the profile status change command may be the profile enabling command to enable the targeted profile. In another implementation, the profile status change command may be the profile disabling command to disable the targeted profile. The profile status change command may include a profile identifier (pID) or a Security Domain Application Identifier (AID SD) for identifying the targeted profile which is to be enabled or disabled upon execution of the profile status change command. The profile change may also include response parameters and a response mode.

At block 404, the response parameters are stored in the embedded smart card 102. In one implementation, the embedded smart card 102 may also store the response mode. The response mode may specify the type of transport protocol to be used to send notifications to the subscription manager 108, and the response parameters may be the parameters that are necessary for addressing of the transport protocol, identified in the response mode. In one implementation, the embedded smart card 102 stores the response parameters and the response mode included in the profile status change command. In one implementation, if the response parameters and the response mode are not present in the profile status change command, the embedded smart 102 may store the response parameters and the response mode which are used for sending the profile status change command to the embedded smart card 102

At block 406, a status of the targeted profile, in the embedded smart card 102, is changed upon execution of the profile status change command. In one implementation, when the profile status change command is the profile enabling command, the embedded smart card 102 changes the status of the targeted profile to enabled and status of the currently active profile 118 is changed to disabled. The device 104 connects to a network through the profile for which the status is enabled. In said implementation, the status of the targeted profile is enabled and, therefore, the device 104 device connects to the network corresponding to the targeted profile.

In another implementation, when the profile status change command is the profile disabling command, the embedded smart card 102 changes the status of the targeted profile to disabled and status of the provisioning profile 120 is changed to enabled. Therefore, the provisioning profile 120 acts as the currently active profile 118 in the embedded smart card 102 and the device 104 connects to the network corresponding to the provisioning profile 120.

At block 408, a notification is sent from the embedded smart card 102 to the subscription manager 108 using the response parameters and the response mode. The notification may notify the subscription manager 108 about successful execution of the profile status change command in the embedded smart card 102 and about the profile which is currently active profile 118 in the embedded smart card 102. In an implementation, before connecting to the network and sending the notification to the subscription manager 108, the device 104 may trigger a reset for the embedded smart card 102. The reset of the embedded smart card 102 may allow the device 104 and the embedded smart card 102 to coordinate or synchronize content related to the profiles, if there is any change in configuration of the embedded smart card 102. In one implementation, the notification may include at least one identifier, such as IMEI, MSISDN, IMSI, eUICC-ID, ICC-ID, CIN, and key server address, which may be used for addressing of the transport protocols and informing other entities about the configuration of the embedded smart card 102.

Therefore, any change in the status of the profiles in the embedded smart card 102 is communicated to the subscription manager 108 through the notification. The subscription manager 108 is thus made aware about the currently active profile 118 among the multiple profiles in the embedded smart card 102.

Although embodiments for a notification mechanism for profile status change in an embedded smart card have been described in a language specific to structural features and/or methods, it is to be understood that the invention is not necessarily limited to the specific features or methods described. Rather, the specific features and methods are disclosed as exemplary embodiments for notifying successful execution of the profile status change command, in the embedded smart card, to the subscription manager.

## Claims

1. An embedded smart card (102) comprising:
a processor (112); and
a module (116) coupled to the processor (112), the module (116) configured to:
receive a profile status change command from a subscription manager (108);
store response parameters associated with the profile status change command, wherein the response parameters correspond to parameters for addressing a transport security protocol for sending a notification to the subscription manager (108);
change a status of a targeted profile upon execution of the profile status change command;
reset the embedded smart card (102) upon receiving a card reset request from a device (104) in response to changing the status of the targeted profile; and
send a notification to the subscription manager (108) using the response parameters after resetting the embedded smart card (102).

2. The embedded smart card (102) as claimed in claim 1, wherein the module (116) is further configured to store a response mode associated with the profile status change command.

3. The embedded smart card (102) as claimed in claim 2, wherein the response mode identifies a transport security protocol to be used for sending the notification.

4. The embedded smart card (102) as claimed in claim 1, wherein the notification notifies the subscription manager (108) about a currently active profile (118) after execution of the profile status change command and resetting of the embedded smart card (102).

5. The embedded smart card (102) as claimed in claim 1, wherein the notification includes at least one identifier, the at least one identifier being one of IMEI, MSISDN, IMSI, eUICC-ID, ICC-ID, CIN, and key server address.

6. The embedded smart card (102) as claimed in claim 1, wherein the profile status change command includes one of a profile identifier (pID) and a Security Domain Application Identifier (AID SD) to identify the targeted profile.

7. The embedded smart card (102) as claimed in claim 2, wherein the embedded smart card (102) is configured to decrypt the profile status change command and to obtain the response parameters and the response mode.

8. The embedded smart card (102) as claimed in claim 1, wherein the profile status change command is a profile enabling command.

9. The embedded smart card (102) as claimed in claim 8, wherein the embedded smart card (102) enables the targeted profile and disables the currently active profile (118) on execution of the profile enabling command.

10. The embedded smart card (102) as claimed in claim 1, wherein the profile status change command is a profile disabling command.

11. The embedded smart card (102) as claimed in claim 10, wherein the embedded smart card (102) disables the targeted profile and enables a provisioning profile (120) on execution of the profile disabling command.

12. A device (104) comprising the embedded smart card (102) as claimed in any one of the preceding claims.

13. A system comprising:
a subscription manager (108) configured to,
transmit a profile status change command to a device (104); and
the device (104) communicatively connected to the subscription manager (108) through a communication network (106), wherein the device comprises an embedded smart card (102) configured to,
store response parameters and response mode associated with the profile status change command, wherein the response parameters correspond to parameters for addressing a transport security protocol for sending a notification to the subscription manager (108) and the response mode identifies the transport security protocol;
change a status of a targeted profile in the embedded smart card (102) upon execution of the profile status change command;
reset the embedded smart card (102), upon receiving a card reset request from the device (104) in response to changing the status of the targeted profile; and
send a notification from the embedded smart card (102) to the subscription manager (108) using the response parameters and the response mode after resetting the embedded smart card (102).

14. A method for notifying a subscription manager (108) upon execution of a profile status change command in an embedded smart card (102), the method comprising:
receiving the profile status change command from the subscription manager (108);
storing response parameters and response mode associated with the profile status change command in the embedded smart card (102) wherein the response parameters correspond to parameters for addressing a transport security protocol for sending a notification to the subscription manager (108) and the response mode identifies the transport security protocol;
changing a status of a targeted profile in the embedded smart card (102) upon execution of the profile status change command;
resetting the embedded smart card (102), upon receiving a card reset request from the device (104) in response to changing the status of the targeted profile; and
sending a notification from the embedded smart card (102) to the subscription manager (108) using the response parameters and the response mode after resetting the embedded smart card (102).

15. The method as claimed in claim 14, comprising registering the device (104) with the network corresponding to the currently active profile in the embedded smart card (102) after resetting the embedded smart card (102).

16. A computer readable medium having stored thereon computer executable instructions that when executed by a processor (112) performs steps comprising:
receiving a profile status change command from a subscription manager (108);
storing response parameters and response mode associated with the profile status change command in an embedded smart card (102) wherein the response parameters correspond to parameters for addressing a transport security protocol for sending a notification to the subscription manager (108) and the response mode identifies the transport security protocol;
changing a status of a targeted profile in the embedded smart card (102) upon execution of the profile status change command;
resetting the embedded smart card (102), upon receiving a card reset request from a device (104) in response to changing the status of the targeted profile; and
sending a notification from the embedded smart card (102) to the subscription manager (108) using the response parameters and the response mode after resetting the embedded smart card (102).

## Patentansprüche

1. Eingebettete Chipkarte (102), umfassend:
einen Prozessor (112); und
ein Modul (116), das an den Prozessor (112) gekoppelt ist, wobei der Prozessor (116) konfiguriert ist, zum:
Empfangen eines Profilstatus-Änderungsbefehls von einem Abonnementmanager (108);
Speichern von Antwortparametern, die dem Profilstatus-Änderungsbefehl zugeordnet sind, wobei die Antwortparameter Parametern zum Adressieren eines Übertragungsicherheits-Protokolls zum Senden einer Benachrichtigung an den Abonnementmanager (108) entsprechen;
Ändern eines Status eines gezielten Profils bei Ausführung des Profilstatus-Änderungsbefehls;
Zurücksetzen der eingebetteten Chipkarte (102) bei Empfangen einer Kartenzurücksetzungs-Anfrage von einer Vorrichtung (104) als Antwort auf das Ändern des Status des gezielten Profils; und Versenden einer Benachrichtigung an den Abonnementmanager (108) unter Verwenden der Antwortparameter nach dem Zurücksetzen der eingebetteten Chipkarte (102).

2. Eingebettete Chipkarte (102) gemäß Anspruch 1, wobei das Modul (116) weiterhin zum Speichern eines Antwortmodus konfiguriert ist, der dem Profilstatus-Änderungsbefehl zugeordnet ist.

3. Eingebettete Chipkarte (102) gemäß Anspruch 2, wobei der Antwortmodus ein Übertragungssicherheits-Protokoll identifiziert, das zum Senden der Benachrichtigung zu verwenden ist.

4. Eingebettete Chipkarte (102) gemäß Anspruch 1, wobei die Benachrichtigung den Abonnementmanager (108) nach der Ausführung des Profilstatus-Änderungsbefehls und dem Zurücksetzen der eingebetteten Chipkarte (102) über ein derzeitig aktives Profil (118) benachrichtigt.

5. Eingebettete Chipkarte (102) gemäß Anspruch 1, wobei die Benachrichtigung wenigstens eine Kennung einschließt, wobei die wenigstens eine Kennung eines von IMEI, MSIDN, IMSO, eUICC-ID, ICC-ID, CIN und die Schlüsselserver-Adresse ist.

6. Eingebettete Chipkarte (102) gemäß Anspruch 1, wobei der Profilstatus-Änderungsbefehl eine einer Profilkennung (pID) und eine Sicherheitsdomänen-Anwendungskennung (AID SD) einschließt, um das gezielte Profil zu identifizieren.

7. Eingebettete Chipkarte (102) gemäß Anspruch 2, wobei die eingebettete Chipkarte (102) zum Entschlüsseln des Profilstatus-Änderungsbefehls und zum Einholen der Antwortparameter und des Antwortmodus konfiguriert ist.

8. Eingebettete Chipkarte (102) gemäß Anspruch 1, wobei der Profilstatus-Änderungsbefehl ein den Befehl ermöglichendes Profil ist.

9. Eingebettete Chipkarte (102) gemäß Anspruch 8, wobei die eingebettete Chipkarte (102) das gezielte Profil aktiviert und das derzeitig aktive Profil (118) bei Ausführung des den Befehl ermöglichenden Profils deaktiviert.

10. Eingebettete Chipkarte (102) gemäß Anspruch 1, wobei der Profilstatus-Änderungsbefehl ein den Befehl deaktivierendes Profil ist.

11. Eingebettete Chipkarte (102) gemäß Anspruch 10, wobei die eingebettete Chipkarte (102) das gezielte Profil deaktiviert und das versorgende Profil (120) bei Ausführung des den Befehl deaktivierenden Profils aktiviert.

12. Vorrichtung (104), umfassend die eingebettete Chipkarte (102) gemäß irgendeinem der voranstehenden Ansprüche.

13. System, umfassend:
einen Abonnementmanager (108), der konfiguriert ist zum
Übertragen eines Profilstatus-Änderungsbefehls auf eine Vorrichtung (104); und
die Vorrichtung (104), die kommunikativ an den Abonnementmanager (108) durch ein Kommunikationsnetzwerk (106) angeschlossen ist, wobei die Vorrichtung eine eingebettete Chipkarte (102) umfasst, die konfiguriert ist zum
Speichern von Antwortparametern und einem Antwortmodus, die dem Profilstatus-Änderungsbefehl zugeordnet sind, wobei die Antwortparameter Parametern zum Adressieren eines Übertragungsicherheits-Protokolls zum Senden einer Benachrichtigung an den Abonnementmanager (108) entspricht und der Antwortmodus das Übertragungsicherheits-Protokoll identifiziert;
Ändern eines Status eines gezielten Profils in der eingebetteten Chipkarte (102) bei Ausführung des Profilstatus-Änderungsbefehls;
Zurücksetzen der eingebetteten Chipkarte (102) beim Empfangen einer Kartenzurücksetzungs-Anfrage von der Vorrichtung (104) als Antwort auf das Ändern des Status des gezielten Profils; und
Senden einer Benachrichtigung von der eingebetteten Chipkarte (102) an den Abonnementmanager (108)unter Verwenden der Antwortparameter und des Antwortmodus nach dem Zurücksetzen der eingebetteten Chipkarte (102).

14. Verfahren zum Benachrichtigen eines Abonnementmanagers (108) bei Ausführung eines Profilstatus-Änderungsbefehls in einer eingebetteten Chipkarte (102), wobei das Verfahren umfasst:
Empfangen des Profilstatus-Änderungsbefehls von dem Abonnementmanager (108);
Speichern von Antwortparametern und einem Antwortmodus, die dem Profilstatus-Änderungsbefehl zugeordnet sind, in der eingebetteten Chipkarte (102), wobei die Antwortparameter Parametern zum Adressieren eines Übertragungsicherheits-Protokolls zum Senden einer Benachrichtigung an den Abonnementmanager (108) entspricht und der Antwortmodus das Übertragungsicherheits-Protokoll identifiziert;
Ändern eines Status eines gezielten Profils in der eingebetteten Chipkarte (102) bei Ausführung des Profilstatus-Änderungsbefehls;
Zurücksetzen der eingebetteten Chipkarte (102) beim Empfangen einer Kartenzurücksetzungs-Anfrage von der Vorrichtung (104) als Antwort auf das Ändern des Status des gezielten Profils; und
Senden einer Benachrichtigung von der eingebetteten Chipkarte (102) an den Abonnementmanager (108)unter Verwenden der Antwortparameter und des Antwortmodus nach dem Zurücksetzen der eingebetteten Chipkarte (102).

15. Verfahren gemäß Anspruch 14, umfassend nach dem Zurücksetzen der eingebetteten Chipkarte (102)das Registrieren der Vorrichtung (104) bei dem Netzwerk, das dem derzeitig aktiven Profil in der eingebetteten Chipkarte (102) entspricht.

16. Computerlesbarer Datenträger mit darin gespeicherten computerlesbaren Anweisungen, der beim Ausführen durch einen Prozessor (112) Schritte ausführt, umfassend:
Empfangen eines Profilstatus-Änderungsbefehls von einem Abonnementmanager (108);
Speichern von Antwortparametern und einem Antwortmodus, die dem Profilstatus-Änderungsbefehl zugeordnet sind, in einer eingebetteten Chipkarte (102), wobei die Antwortparameter Parametern zum Adressieren eines Übertragungsicherheits-Protokolls zum Senden einer Benachrichtigung an den Abonnementmanager (108) entspricht und der Antwortmodus das Übertragungsicherheits-Protokoll identifiziert;
Ändern eines Status eines gezielten Profils in der eingebetteten Chipkarte (102) bei Ausführung des Profilstatus-Änderungsbefehls;
Zurücksetzen der eingebetteten Chipkarte (102) beim Empfangen einer Kartenzurücksetzungs-Anfrage von einer Vorrichtung (104) als Antwort auf das Ändern des Status des gezielten Profils; und
Senden einer Benachrichtigung von der eingebetteten Chipkarte (102) an den Abonnementmanager (108)unter Verwenden der Antwortparameter und des Antwortmodus nach dem Zurücksetzen der eingebetteten Chipkarte (102).

## Revendications

1. Carte à circuit intégré (102) comprenant un processeur (112) ;
et un module (116) couplé au processeur (112), ledit module (116) étant configuré pour :
recevoir une instruction de modification de statut de profil d'un gestionnaire d'abonnement (108) ;
stocker les paramètres de réponse associés à l'instruction de modification de statut de profil, dans laquelle les paramètres de réponse correspondent aux paramètres de traitement d'un protocole de sécurité des transports pour envoyer une notification au gestionnaire d'abonnement (108) ;
modifier un statut de profil cible dès l'exécution de l'instruction de modification de statut de profil ;
réinitialiser la carte à circuit intégré (102) dès la réception d'une requête de réinitialisation de la carte provenant d'un dispositif (104) en réponse à la modification du statut de profil cible ; et
envoyer une notification au gestionnaire d'abonnement (108) en utilisant les paramètres de réponse après avoir réinitialisé la carte à circuit intégré (102).

2. Carte à circuit intégré (102) selon la revendication 1, dans laquelle le module (116) est en outre configuré pour stocker un mode de réponse associé à l'instruction de modification de statut de profil.

3. Carte à circuit intégré (102) selon la revendication 2, dans laquelle le mode de réponse identifie un protocole de sécurité des transports qui devra être utilisé pour envoyer la notification.

4. Carte à circuit intégré (102) selon la revendication 1, dans laquelle la notification communique au gestionnaire d'abonnement (108) un profil actuellement actif (118) après l'exécution de l'instruction de modification de statut de profil et réinitialisation de la carte à circuit intégré (102).

5. Carte à circuit intégré (102) selon la revendication 1, dans laquelle la notification comporte au moins un identifiant, ledit au moins un identifiant étant l'un de IMEI, MSISDN, IMSI, eUICC-ID, ICC-ID, CIN, et de l'adresse du serveur de clés.

6. Carte à circuit intégré (102) selon la revendication 1, dans laquelle l'instruction de modification de statut de profil comporte l'un d'un identifiant de profil (pID) et d'un Identifiant d'Application de Domaine de Sécurité (AID SD) pour identifier le profil cible.

7. Carte à circuit intégré (102) selon la revendication 2, dans laquelle la carte à circuit intégré (102) est configurée pour déchiffrer l'instruction de modification de statut de profil et pour obtenir les paramètres de réponse et le mode de réponse.

8. Carte à circuit intégré (102) selon la revendication 1, dans laquelle l'instruction de modification de statut de profil est une instruction d'activation de profil.

9. Carte à circuit intégré (102) selon la revendication 8, dans laquelle la carte à circuit intégré (102) active le profil cible et désactive le profil actuellement actif (118) dès l'exécution de l'instruction de modification de profil.

10. Carte à circuit intégré (102) selon la revendication 1, dans laquelle l'instruction de modification de statut de profil est une instruction de désactivation de profil.

11. Carte à circuit intégré (102) selon la revendication 10, dans laquelle la carte à circuit intégré (102) désactive le profil cible et active un profil de fonctionnalités (120) dès l'exécution de l'instruction de modification de profil.

12. Dispositif (104) comprenant la carte à circuit intégré (102) selon l'une quelconque des revendications précédentes.

13. Système comprenant :
un gestionnaire d'abonnement (108) configuré pour transmettre une instruction de modification de statut de profil à un dispositif (104) ; et
le dispositif (104) étant connecté pour communiquer avec le gestionnaire d'abonnement (108) par l'intermédiaire d'un réseau de communication (106), dans laquelle le dispositif comprend une carte à circuit intégré (102) configurée pour,
stocker les paramètres de réponse et le mode de réponse associés à l'instruction de modification de statut de profil, dans laquelle les paramètres de réponse correspondent aux paramètres de traitement d'un protocole de sécurité des transports pour envoyer une notification au gestionnaire d'abonnement (108) et le mode de réponse identifie le protocole de sécurité des transports ;
modifier un profil cible dans la carte à circuit intégré dès l'exécution de l'instruction de modification de statut de profil ;
réinitialiser la carte à circuit intégré (102) dès la réception d'une requête de réinitialisation de la carte provenant du dispositif (104) en réponse à la modification du statut de profil cible ; et
envoyer une notification, provenant de la carte à circuit intégré (102), au gestionnaire d'abonnement (108) en utilisant les paramètres de réponse et le mode de réponse après avoir réinitialisé la carte à circuit intégré (102).

14. Procédé de notification d'un gestionnaire d'abonnement (108) dès l'exécution d'une instruction de modification de statut de profil dans une carte à circuit intégré (102), ledit procédé comprenant les étapes suivantes :
recevoir l'instruction de modification de statut de profil du gestionnaire d'abonnement (108);
stocker les paramètres de réponse et le mode de réponse associés à l'instruction de modification de statut de profil dans la carte à circuit intégré (102), dans laquelle les paramètres de réponse correspondent aux paramètres de traitement d'un protocole de sécurité des transports pour envoyer une notification au gestionnaire d'abonnement (108) et le mode de réponse identifie le protocole de sécurité des transports ;
modifier un statut de profil cible dans la carte à circuit intégré (102) dès l'exécution de l'instruction de modification de statut de profil ;
réinitialiser la carte à circuit intégré (102) dès la réception d'une requête de réinitialisation de la carte provenant du dispositif (104) en réponse à la modification du statut de profil cible ; et
envoyer une notification, provenant de la carte à circuit intégré (102), au gestionnaire d'abonnement (108) en utilisant les paramètres de réponse et le mode de réponse après avoir réinitialisé la carte à circuit intégré (102).

15. Procédé selon la revendication 14, comprenant l'enregistrement du dispositif (104) auprès du réseau correspondant au profil actuellement actif dans la carte à circuit intégré (102) après la réinitialisation de la carte à circuit intégré (102).

16. Support lisible par ordinateur sur lequel sont stockées des instructions exécutables par ordinateur qui, lorsqu'elles sont exécutées par un processeur (112) effectuent les étapes qui consistent à :
recevoir une instruction de modification de statut de profil d'un gestionnaire d'abonnement (108) ;
stocker les paramètres de réponse et le mode de réponse associés à l'instruction de modification de statut de profil dans une carte à circuit intégré (102), dans laquelle les paramètres de réponse correspondent aux paramètres de traitement d'un protocole de sécurité des transports pour envoyer une notification au gestionnaire d'abonnement (108) et le mode de réponse identifie le protocole de sécurité des transports ;
modifier un statut de profil cible dans la carte à circuit intégré (102) dès l'exécution de l'instruction de modification de statut de profil ;
réinitialiser la carte à circuit intégré (102) dès la réception d'une requête de réinitialisation de la carte provenant d'un dispositif (104) en réponse à la modification du statut de profil cible ; et
envoyer une notification, provenant de la carte à circuit intégré (102), au gestionnaire d'abonnement (108) en utilisant les paramètres de réponse et le mode de réponse après avoir réinitialisé la carte à circuit intégré (102).
